(19) Europäisches Patentamt
European Patent Office
Office européen des brevets

(11) **EP 1 335 220 A2**

(12) **EUROPEAN PATENT APPLICATION**

(43) Date of publication:
**13.08.2003 Bulletin 2003/33**

(51) Int Cl.⁷: $G02B\ 6/255$

(21) Application number: **03002558.9**

(22) Date of filing: **06.02.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **06.02.2002 JP 2002030028**

(71) Applicant: **Sumitomo Electric Industries, Ltd. Osaka-shi, Osaka 541-0041 (JP)**

(72) Inventors:
• **Yamamoto, Hiroyoshi, Yokohama Works Yokohama-shi, Kanagawa 244-8588 (JP)**
• **Terasawa, Yoshiaki, Yokohama Works Yokohama-shi, Kanagawa 244-8588 (JP)**
• **Shimoda, Koji, Yokohama Works Yokohama-shi, Kanagawa 244-8588 (JP)**
• **Ona, Atsuhiro, Yokohama Works Yokohama-shi, Kanagawa 244-8588 (JP)**

(74) Representative: **HOFFMANN - EITLE Patent- und Rechtsanwälte Arabellastrasse 4 81925 München (DE)**

(54) **Cable connecting method and optical fiber connecting member**

(57) This invention provides a connecting method and the like for between optical fibers with little connection loss without heat treatment after fusion-splicing. This connecting method is a method of optically connecting first and second optical fibers which differ in core diameter to such an extent that the fusion-splicing loss is 0.45 dB or more. In the method, a connecting member is prepared between these first and second optical fibers, and the two end faces of the connecting member are directly fusion-spliced to one end face of the first optical fiber and one end face of the second optical fiber, respectively. The prepared connecting member, in particular, is comprised of a third optical fiber whose core diameter is large enough to exhibit a fusion-splicing loss of 0.45 dB or less at a wavelength of 1.55 μm when it is connected to the first optical fiber, and a fourth optical fiber whose core diameter is small enough to exhibit a fusion-splicing loss of 0.45 dB or less when it is connected to the second optical fiber. The connection loss between the third and fourth optical fibers does not over 0.45 dB.

## Fig.1A

EP 1 335 220 A2

## Description

### BACKGROUND OF THE INVENTION

### Field of the Invention

The present invention relates a cable connecting method of optically connecting cables respectively including optical fibers having different core diameters, and an optical fiber connecting member suitable to a cable connection.

### Related Background Art

Some optical transmission line through which signal light of a plurality of channels having different wavelengths propagates in an optical communication system is formed by connecting a plurality of optical fibers having different optical characteristics. For example, a standard single-mode optical fiber having a zero dispersion wavelength near a wavelength of 1.3 μm and a chromatic dispersion of about 16 to 20 ps/nm/km at a wavelength of 1.55 μm is connected to a dispersion-compensating optical fiber having a negative chromatic dispersion at the wavelength of 1.55 μm, thereby forming an optical transmission line. In the optical transmission line formed by connecting such a standard single-mode optical fiber to the dispersion-compensating optical fiber, the absolute value of the whole accumulated chromatic dispersion near 1.55 μm, which is a signal wavelength band, is reduced by properly setting the ratio of the lengths of the respective optical fibers, thereby suppressing a deterioration in transmission quality due to a deterioration of signal waveform.

In some case, two optical fibers like those which have different optical characteristics are connected to each other through an optical connector. In general, however, the end faces of these optical fibers are fusion-spliced to each other. Fusion-splicing is performed in the following manner. Coating portions near the end faces of the first and second optical fibers to be fusion-spliced are removed first, and then the end faces are aligned and butted against each other. The end faces of the first and second optical fibers are connected to each other by being heated/fused and pushed to each other. If the difference in effective area between the first and second optical fibers fusion-spliced in this manner is small, the transmission loss (connection loss) at the fusion-splicing between the two optical fibers is low.

If, however, the difference in effective area between optical fibers fusion-spliced to each other is large, the connection loss is high. In such a case, after fusion-splicing, heat treatment (TEC :Thermal Expansion Core) is performed with respect to a region including the connection point. In this heat treatment, a predetermined region along the longitudinal direction, including the fusion-splice, is heated at a temperature at which the respective optical fibers are not fused, and the impurity with which the respective optical fibers are doped is diffused. With this process, the difference in effective area between the respective optical fibers at the fusion-spliced point is reduced, thus reducing the connection loss.

### SUMMARY OF THE INVENTION

As a result of examination of the above conventional technique, the inventors discovered the following problems. As compared with a case wherein a connection loss is sufficiently low with only fusion-splicing, when heat treatment is performed after fusion-splicing, the productivity in a connection process is low. In addition, a special apparatus for heat treatment is required. Furthermore, when the first and second optical fibers to be connected are to be installed in a relay section, fusion-splicing and heat treatment are performed on the installation site. However, it is difficult to perform heat treatment on the installation site.

The present invention has been made to solve the above problems, and has as its object to provide a cable connecting method of connecting optical fiber transmission lines to each other with a low connection loss without performing any heat treatment after fusion-splicing, and an optical fiber connecting member suitable to the connecting method.

A cable connecting method according to the present invention is a method of optically connecting a first cable to a second cable. The first cable includes a first optical fiber having a first core diameter, and the second cable includes a second optical fiber having a second core diameter smaller than the first core diameter of the first optical fibers. The first and second cables are connected by respectively connecting between the first and second optical fibers. In particular, the cable connecting method comprises a structure for reducing a connection loss due to a core diameter difference between the optical fibers included in the cables to be connected, and is especially effective when the first and second optical fibers differ in core diameter to such an extent that the fusion-splicing loss between the optical fibers is 0.45 dB or more at a wavelength of 1.55 μm.

In addition, with regard to the first and second optical fibers to be connected to each other, the ratio of the effective area of the second optical fiber to that of the first optical fiber may be 2 or more at the wavelength of 1.55 μm. Furthermore, the difference in effective area between the first and second optical fibers may be 10 μm$^2$ or more at the wavelength of 1.55 μm.

In the connecting method according to the present invention, a connecting member (an optical fiber connecting member according to the present invention) to be disposed between the first and second optical fibers which exhibit a high connection loss with only fusion-splicing as described above is prepared, and end portions of the first and second optical fibers are directly fusion-spliced to the end portions of the connecting member, respectively. The prepared connecting member comprises a third optical fiber having a third core diameter equal to or smaller than the first core diameter, and a fourth optical fiber connected to one end of the first optical fiber and having a fourth core diameter equal to or larger than the second core diameter. Specifically, in the connection member, the third and fourth optical fibers are previously and directly connected to each other by fusion-splicing the third and fourth optical fibers, an expansion core treatment being applied to the fourth optical fiber so as to reducing a difference between core diameters of the third and fourth optical fibers (a core diameter difference becomes substantially zero).

The connection of optical fibers includes a case wherein opposing end portions are fusion-spliced, and a case wherein heat treatment (TEC process) is performed at a region including a fusion-spliced point after fusion-splicing. In this specification, in particular, a fusion-splicing loss indicates the transmission loss between optical fibers which are fusion-spliced, but not subjected to heat treatment. The term "connection loss" simply indicates a transmission loss between optical fibers which are simply connected to each other. In this case, only fusion-splicing may be done, or heat treatment may be done after fusion-splicing. Also, in the specification, the term "fusion-splice" simply indicates a connecting process excluding an expansion core treatment such as TEC process.

In the connecting method according to the present invention, it is preferable that, at a predetermined wavelength, a difference ratio of a mode field diameter of the third optical fiber with respect to that of the first optical fiber is 5% or less in order to suppress an increase of the fusion-splicing loss between the first optical fiber and the third optical fiber of the connecting member. Similarly, a difference ratio of a mode field diameter of the fourth optical fiber with respect to that of the second optical fiber is preferably 5% or less.

The third and fourth optical fibers constituting the connecting member are preferably selected such that an increase amount of transmission loss between the first and second optical fibers due to an insertion of the connecting member becomes 0.45 dB or less at the wavelength of 1.55 $\mu$m. In addition, the fusion-splicing loss between the first optical fiber and the third optical first of the connecting member is preferably 0.45 dB or less at the wavelength of 1.55 $\mu$ m. The fusion-splicing loss between the second optical fiber and the fourth optical fiber of the connecting member is preferably 0.45 dB or less at the wavelength of 1.55 $\mu$m. The entire connection loss of the optical fiber transmission line obtained by the above connecting method is preferably 0.45 dB or less at the wavelength of 1.55 $\mu$m. That is, the total connection loss between the first optical fiber and the third optical fiber, between the third optical fiber and the fourth optical fiber, and between the fourth optical fiber and the second optical fiber is preferably 0.45 dB or less at the wavelength of 1.55 $\mu$m.

The connecting member may comprises a polyimid coat covering the outer periphery of the third and fourth optical fibers, and the connecting member is preferably accommodated in a predetermined joint box. The polyimid coat improves hermeticity and heat resistance of the connected portion between the third and fourth optical fibers, and thereby a sufficient mechanical strength can be obtained. The cable connecting method according to the present invention is effective to a rehabilitation of submarine cable that a work area is restricted to an upper board of ship. In this case, the third and fourth optical fibers may have different coat structures such as a coat thickness, respectively. For example, in the entire connection member, it is preferable that the coat covering a predetermined region including the fusion-splicing point between the third and fourth optical fibers is formed so as for its diameter to become constant or continuously change along a longitudinal direction of said optical fiber connecting member. Further, the connecting member may comprise a reinforcing member arranged so as to cover the region including a fusion-splicing point between the third and fourth optical fibers. Though the connecting member constitutes a part of an optical fiber transmission line by being inserted between the third and fourth optical fibers, a cutoff wavelength becomes longer than a signal wavelength if the third and fourth optical fibers constituting the connecting member have a short length (a single-mode transmission can not be ensured). That is, by using a length dependency of cutoff wavelength, these third and fourth optical fibers preferably have lengths enough to ensure a single-mode transmission with respect to light of a predetermined wavelength.

In rehabilitation of submarine cable, a cable is pulled up from sea bottom to above sea level, and therefore it is necessary to consider a surplus length ratio of cable. Thus, the connecting member is preferably accommodated in the joint box while a surplus length treatment is performed so as for at least a part of said third optical fiber and at least a part of said fourth optical fiber to fall within a predetermined range from a first bending diameter and a second bending diameter. That is, the third and fourth optical fibers have suitable bending characteristics. Also, for the work efficiency of connection between the first and second cables, the connecting member preferably comprises a marking for differentiating between the third and fourth optical fibers.

The optical transmission system, which includes cables connected through the connecting member (an optical fiber connecting member according to the present invention) having the above mentioned structure, allows transmission of signal light of one or more channels with different wavelengths. According to the optical transmission system, as described above, since the first and second optical fibers are optically connected to each other through the connecting member comprising the third and fourth optical fibers connected to each other such that the connection loss becomes 0.45 dB or less at the wavelength of 1.55 μm, the connection loss between the first and second optical fibers can be suppressed low. In addition, the third and fourth optical fibers of the connecting member may be so connected as to reduce the connection loss in advance in a factory or the like. The connection loss between the first optical fiber and the third optical fiber and the connection loss between the second optical fiber and the fourth optical fiber can be small values without any heat treatment after fusion-splicing. Therefore, since there is no need to perform heat treatment on a site where the first and second optical fibers are installed, the connecting operation on the installation site is facilitated, thus improving productivity.

In particular, when the ratio between the effective areas of the first and second optical fibers is 2 or more, or when the difference in effective area between the first and second optical fibers is 10 $\mu m^2$ or more, the connection loss becomes greatly high at the time that the first and second optical fibers are directly connected to each other. According to the present invention, however, since the first and second optical fibers are optically connected to each other through the connecting member, the connection loss becomes low.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

BRIEF DESCRIPTION OF THE DRAWINGS

Figs 1A and 1B are views for explaining the structures of a cable connecting method according to the present invention and the connecting member;

Figs. 2A to 2D are views for explaining the respective steps in a first embodiment of a cable connecting method according to the present invention;

Fig 3 is a graph for explaining the relationship between a difference ratio of mode field diameter (MFD) and a fusion-splicing loss (dB) in optical fibers to be connected;

Figs. 4A to 4D are views for explaining the respective steps in a second embodiment (mainly showing a structure of the region near the connecting member) of a cable connecting method according to the present invention;

Figs 5A and 5B are views for explaining applications of the coat structure near the connecting point in the connecting member according to the present invention;

Fig. 6 is a view for explaining an accommodating structure for a connecting member according to the present invention;

Fig. 7 is a view showing the example of installation site of an cable connecting method according to the present invention; and

Fig. 8 is a view showing the structure of an optical fiber transmission line.

DETAILED DESCRIPTION OF THE PREFERRED EMBODIMENTS

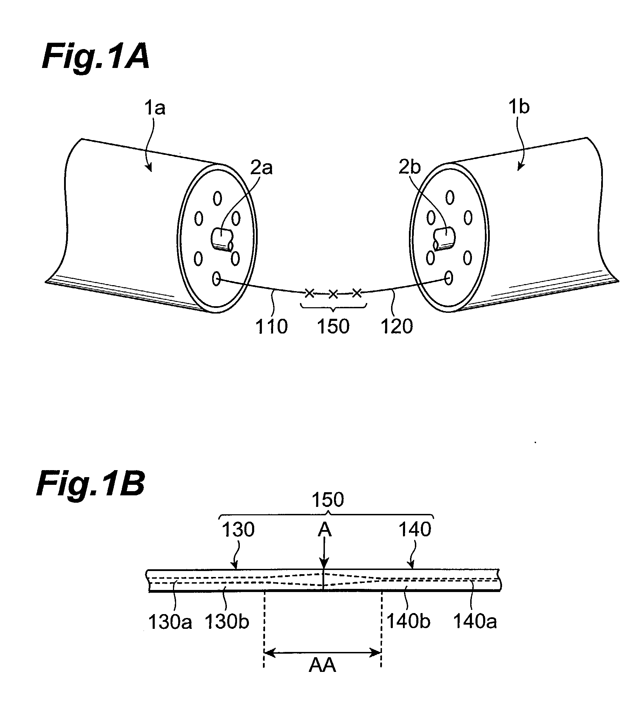

Each embodiment of a cable connecting method and an optical fiber connecting member according to the present invention will be described in detail below with reference to Figs. 1A-2D, 3, 4A-5B and 6-8. Note that the same reference numerals denote the same parts throughout the drawings, and a repetitive description will be avoided.

Figs 1A and 1B are views for explaining a cable connecting method according to the present invention. Fig 1A shows a connection state of the first cable 1a and the second cable 1b, and Fig 1B shows a structure of the connecting member to be installed between the first optical fiber 110 included in the first cable 1a and the second optical fiber 120 included in the second cable 1b. In particular, the cable connecting method according to the present invention is an effective connecting method when differences between optical fibers respectively included in the cables to be connected.

As shown in Fig 1A, the first cable 1a includes a plurality of first optical fibers 110 arranged so as to surround the tension member 2a, and the second cable 1b also includes the second optical fibers 120 arranged so as to surround the tension member 2b. The connection between these first cable 1a and second cable 1b is performed by individually connecting the first optical fiber 110 included in the first cable 1a and the associated second optical fiber 120 included in the second cable 1b. A core diameter of each of the second optical fibers 120 is smaller than that of each of the first optical fibers 110.

Each first optical fiber 110 and each second optical fiber 120 is optically connected through the connecting member 150 (an optical fiber connecting member) as shown in Fig 1B. The connecting member 150 comprises a third optical fiber 130 having a core diameter equal to or smaller than that of the first optical fiber 110, and a fourth optical fiber 140 having a core diameter equal to or larger than that of the second optical fiber 120. The third optical fiber 130 comprises a core 130a having a predetermined refractive index, and a cladding 130b provided on the outer periphery of the core 130a. The fourth optical fiber 140 comprises a core 140a having a predetermined refractive index, and a cladding 140b provided on the outer periphery of the core 140a. The third optical fiber 130 and the fourth optical fiber 140 are fusion-spliced, first. Further, the third optical fiber 130 and the fourth optical fiber 140 are performed heat treatment at a predetermined region AA including the fusion-spliced point A so as to become a difference between their core diameters substantially zero.

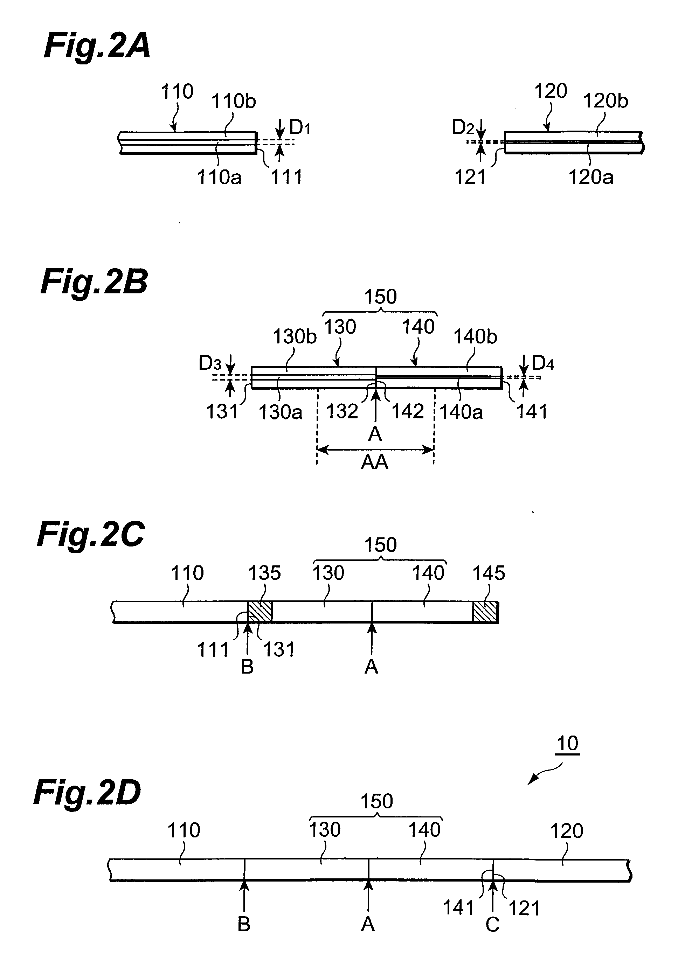

Figs. 2A and 2D are views for explaining the respective steps in the first embodiment of the cable connecting method according to the present invention. The cable connecting method according to the present invention is a method of connecting first and second optical fibers 110 and 120 included in the cables to be connected, each made of silica glass as a main material (see Fig. 1A). Each of the first optical fiber 110 has a core 110a with a diameter D1 and a cladding 110b provided on the outer periphery of the core 110a, and has an end face 111. Each of the second optical fiber 120 has a core 120a with a diameter D2 (< D1) and a cladding 120b provided on the outer periphery of the core 120a, and has an end face 121.

The fusion-splicing loss (transmission loss without heat treatment after fusion-splicing) between the first and second optical fibers 110 and 120 is 0.45 dB or more. Such a fusion-splicing loss can be realized by greatly changing glass composition or refractive index profile of the respective optical fibers to be connected such as setting the ratio of the effective area of the second optical fiber 120 with respect to that of the first optical fiber 110 into 2 or more, or setting a difference between the respective effective areas into 10 $\mu m^2$ or more. In this case, greatly differ in.

Note that as disclosed in Japanese Patent Laid-Open No. 8-248251 (EP 0 724171A2), each effective area $A_{eff}$ is given by

$$A_{eff} = 2\pi(\int_0^\infty E^2 r dr)^2 /(\int_0^\infty E^4 r dr)$$

where E is an electric field accompanying propagated light, and r is the distance from the core center in the radial direction.

In the cable connecting method according to the present invention, a connecting member 150 is inserted between the first optical fiber 110 and the second optical fiber 120 (see Fig. 2B). The connecting member 150 comprises the third and fourth optical fibers 130 and 140. These third and fourth optical fibers 130 and 140 are connected to each other at the connecting point indicated by an arrow A in Fig. 2B. Note that only fusion-splicing may be performed at a connecting point A where the end faces 132 and 142 of the third and fourth optical fibers 130 and 140 are butted against each other, or heat treatment may be performed with respect to an area AA including the connecting point A. That is, it is preferable that an increase amount of transmission loss between the first and second optical fibers 110 and 120 due to the installation of the connecting member 150 becomes 0.45 dB or less.

The third optical fiber 130 comprises a core 130a with a diameter D3 and a cladding 130b provided on the outer periphery of the core 130a, and has a first end face 131 and the second end face 132 opposing the first end face 131. The first optical fiber 110 and third optical fiber 130 are fusion-spliced to each other at a connecting point B where the end faces 111 and 131 are butted against each other. The fusion-splicing loss (transmission loss without heat treatment after fusion-splicing) of this structure is 0.45 dB or less.

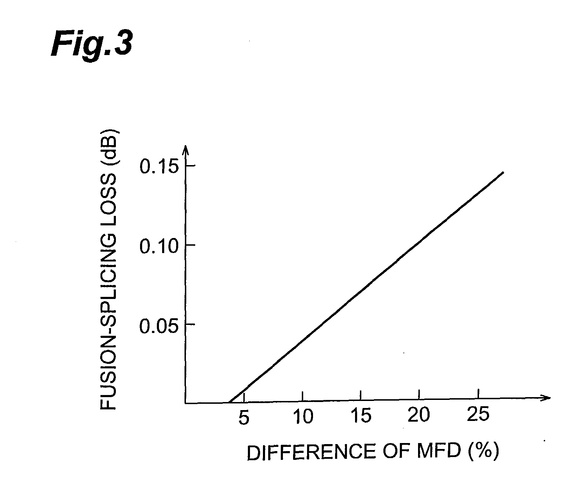

On the other hand, the fourth optical fiber 140 comprises a core 140a with a diameter D4 (< D3) and a cladding 140b provided on the outer periphery of the core 140a, and has the first end face 141 and the second end face 142 opposing the first end face 141. The second optical fiber 120 and fourth optical fiber 140 are fusion-spliced to each other at a connecting point C where the end faces 121 and 141 are butted against each other. The fusion-splicing loss (transmission loss without heat treatment after fusion-splicing) of this structure is 0.45 dB or less. Note that the third optical fiber 130 may be the same type of optical fiber as the first optical fiber 110, and the fourth optical fiber 140 may be the same type of optical fiber as the second optical fiber 120. As shown in Fig. 3, when a difference between mode field diameters of optical fibers to be connected is large, a fusion-splicing loss (dB) becomes large. That is, at a predetermined wavelength, a difference ratio of a mode field diameter of the third optical fiber 130 with respect to that of the first optical fiber 110 may be 5% or less, preferably 4% or less. Similarly, at the predetermined wavelength, a difference ratio of a mode field diameter of the fourth optical fiber 140 with respect to that of the second optical fiber 120 may be 5% or less, preferably 4% or less.

The third optical fiber 130 included in the connecting member 150 is directly fusion-spliced to the associated first optical fiber 110 at the connecting point B where the end faces 111 and 131 are butted against each other (see Fig. 2C). On the other han, the fourth optical fiber 140 included in the connecting member 150 is directly fusion-spliced to the associated second optical fiber 120 at the connecting point C where the end faces 121 and 141 are butted against each other (see Fig. 2D). Even when they are connected by fusion-splicing alone, each connection loss can be 0.45 dB or less, and hence there is no need to perform heat treatment after fusion-splicing.

The connecting member 150 inserted between the first optical fiber 110 and the second optical fiber 120, for differentiating optical fibers to be connected, preferably has markings 135 and 145, as shown in Fig. 2C. These markings 135 and 145 includes coloring materials provided on the end portions of the third and fourth optical fibers 130 and 140, differentiation tapes attached to the end portions of the third and fourth optical fibers 130 and 140.

An optical fiber transmission line 10 (Fig. 2D) manufactured in this manner is formed by sequentially connecting the first optical fiber 110, the connecting member 150 (including the third and fourth optical fibers 130 and 140), and the second optical fiber 120 to each other. As described above, the fusion-splicing loss (transmission loss without heat treatment after fusion-splicing) at the connecting point B (end faces 111 and 131) between the first optical fiber 110 and the third optical fiber 130 can be 0.45 dB or less. The fusion-splicing loss at the connecting point C (end faces 121 and 141) between the second optical fiber 120 and the fourth optical fiber 140 can be 0.45 dB or less. The connection loss at the connecting point A (end faces 132 and 142) between the third optical fiber 130 and the fourth optical fiber 140 is 0.45 dB or less. When, therefore, the first and second optical fibers 110 and 120 are optically connected to each other (through the connecting member 150), the resultant connection loss is equal to the sum of the connection losses at the connecting points A, B, and C. In particular, the sum of the connection losses at the connecting points A, B, and C is preferably 0.45 dB or less.

For example, in the case that an optical fiber having an effective area $A_{eff}$ of 110 $\mu m^2$ as the first optical fiber 110 and an optical fiber having an effective area $A_{eff}$ of 25 $\mu m^2$ as the second optical fiber 120 are connected, the fusion-splicing loss between these prepared optical fibers becomes 1.3dB. In contrast, when these prepared optical fibers are connected through the connecting member 150 according to the present invention (constituted by an optical fiber having an effective area $A_{eff}$ of 105$\mu m^2$ as the third optical fiber 130 and an optical fiber having an effective area $A_{eff}$ of 26 $\mu m^2$ as the fourth optical fiber 140) can be suppressed 0.36 dB. Specifically, when a region including the connecting portion between the third and fourth optical fibers included in the connecting member 150 is subjected to heat treatment at a temperature of about 1000°C for 10 min, the fusion-splicing loss can be reduced to 0.2 dB.

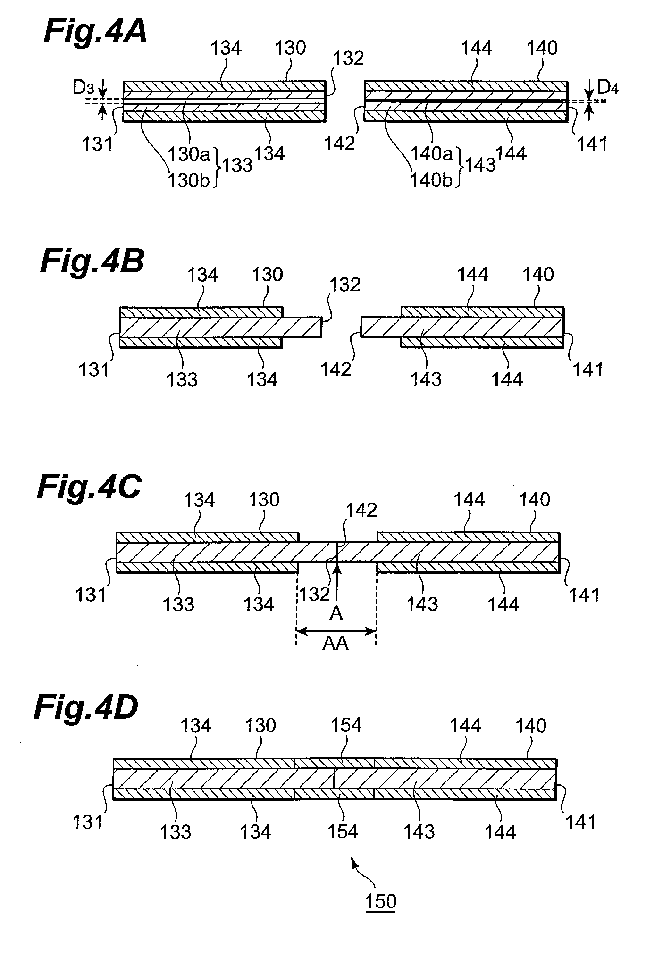

Next, Figs. 4A to 4D are views for explaining the respective steps in a second embodiment of a cable connecting method according to the present invention. Each of these figures mainly show cross-sections of the third and fourth optical fibers 130 and 140 included in the connecting member 150.

First of all, in order to manufacture the connecting member 150, the third and fourth optical fibers 130 and 140 are prepared (see Fig. 4A). The third optical fiber 130 comprises a glass fiber 133, having a core 130a with the diameter D3 and a cladding 130b, whose outer periphery is covered with a resin layer 134. Similarly, the fourth optical fiber 140 comprises a glass fiber 143, having a core 140a with the diameter D4 (< D3) and a cladding 140b, whose outer periphery is covered with a resin layer 144. The glass fibers 133 and 143 each have an outer diameter of 125 $\mu m$, and the resin layers 134 and 144 each have an outer diameter of about 250 $\mu m$. Likewise, the first and second optical fibers 110 and 120 connected to each other through the connecting member 150 each have a core, cladding, and resin layer. Furthermore, when the first and second optical fibers are included in a submarine cable, a material the above mentioned resin layer preferably include polyimid with superior hermeticity and heat resistance.

Subsequently, the resin layer 134 is removed at a region near the end face 132 of the third optical fiber 130, and the resin layer 144 is also removed at a region near the end face 142 of the fourth optical fiber 140 (see Fig. 4B). The third and fourth optical fibers 130 and 140 are connected to each other at the end faces 132 and 142 (see Fig. 4C). This connection need not be done on an installation site, and may be done in advance in the factory or the like. In addition, connection may be done by fusion-splicing alone, or heat treatment may be done after fusion-splicing. Note that the resultant connection loss is 0.45 dB or less. In heat treatment, light is incident from the end face 131 of the third optical fiber 130, and the power of light emerging from the end face 141 of the fourth optical fiber 140 is measured, thereby monitoring a connection loss. Heat treatment is preferably performed until a desired connection loss is obtained, while the connection loss is monitored in this manner.

After the third and fourth optical fibers 130 and 140 are connected to each other, the region from which the resin layer has been removed before the connection is covered with a resin layer 154 again (see Fig. 4D). The outer diameter of the resin layer 154 is almost equal to that of the resin layers 134 and 144. The connecting member 150 is obtained through the following steps.

In the cable connecting method according to the present invention, since the first and second optical fibers 110 and 120 are optically connected to each other through the connecting member 150 formed by connecting the third optical fiber 130 to the fourth optical fiber 140 with a low loss in the above manner, the connection loss between the first optical fiber 110 and the second optical fiber 120 is low. In addition, the third and fourth optical fibers 130 and 140 of the connecting member 150 are connected to each other in advance in the factory or the like with a low connection loss. Therefore, the connection loss between the first optical fiber 110 and the third optical fiber 130 and the connection loss between the second optical fiber 120 and the fourth optical fiber 140 can be small values even without heat treatment after fusion-splicing. Since there is no need to perform heat treatment on a site where the first and second optical fibers 110 and 120 are installed, connecting operation on the installed site is facilitated, thereby attaining excellent productivity.

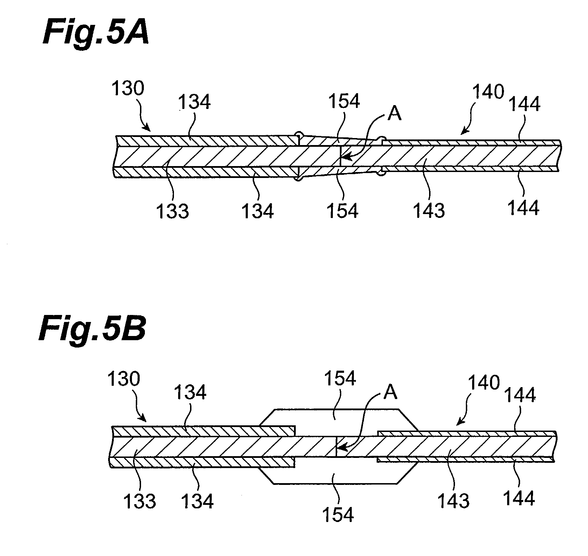

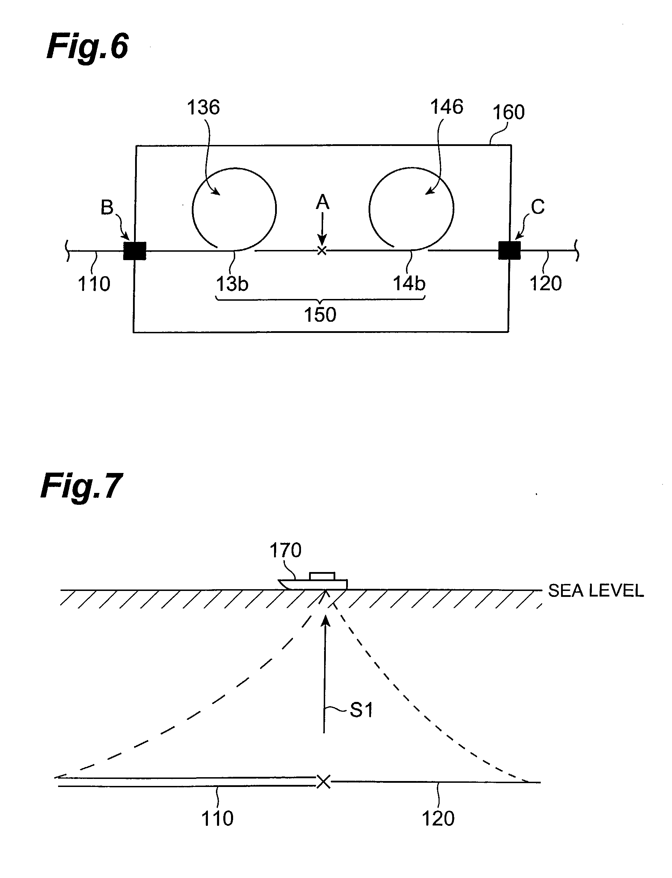

In addition, when the cable connecting method according to the present invention is applied to a rehabilitation of submarine cable, the connecting member 150, as shown in Figs.5 and 6, preferably has a specific structure. Namely, the rehabilitation of submarine, as shown in Fig. 7, is performed such that the first optical fiber 110 and the second optical fiber 120 are connected on the operation ship 170 after pulling up the cable laid on the sea bottom along the direction indicated by an arrow S1 of Fig. 7. Fig. 7 is a view showing the example of installation site of an cable connecting method according to the present invention.

Further, the third and fourth optical fibers 130 and 140 included in the connecting member 150 may have different coating structure, respectively. In this case, as shown in Fig. 5A, the coating layer 154 near the fusion-spliced point A between the third and fourth optical fibers 130 and 140 may be formed so as to become constant or continuously change along a longitudinal direction of the entire connecting member 150. Further, as shown in Fig. 5B, the connecting member 150 may comprises a reinforcing member 155 arranged so as to cover the region including the fusion-spliced point A between the third and fourth optical fibers 130 and 140. Thus connecting member 150 whose connecting point A is reinforced by the reinforcing member 155 is accommodated in a joint box 160 as a relay station.

As shown in Fig. 7, in the rehabilitation of submarine cable, the submarine cable should be pulled up to the operation ship 170,and therefore it is necessary to consider a surplus length ratio of cable. That is, the connecting member 150, as shown in Fig. 6, may be accommodated in the joint box 160 while a surplus length treatment is performed so as for at least a part of the third optical fiber 130 and at least a part of the fourth optical fiber 140 to fall within a predetermined range from a first bending diameter and a second bending diameter. These third and fourth optical fibers 130 and 140 have suitable bending characteristics because they are preformed with a surplus length treatment. In the figure, the numerical "136" indicates a surplus length treated portion of the third optical fiber 130, and the numerical "146" indicates a surplus length treated portion of the fourth optical fiber 140. Also, the surplus length treated portions 136 and 146 have a length enough to ensure a single mode transmission as a part of an optical transmission line.

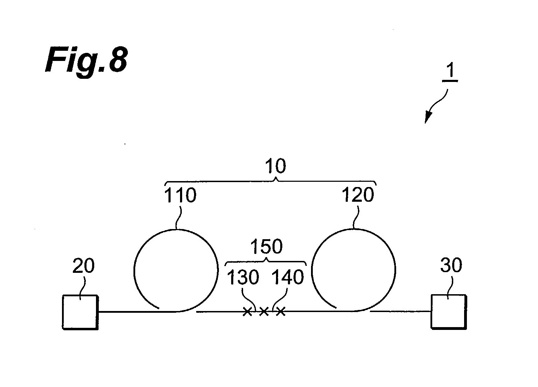

Further, Fig. 8 is a view showing one optical fiber transmission line as a part of an optical communication system applied with the cable connecting method according to the present invention, and this optical transmission system is applied with the optical fiber transmission line 10 having the above mentioned structure. This optical communication system 1 includes an optical transmitter 20, an optical receiver 30, and the optical fiber transmission line 10 installed between the optical transmitter 20 and the optical receiver 30. In this optical communication system 1, the signal light (including one or more signal channels with different wavelengths) transmitted from the optical transmitter 20 sequentially propagates through the first optical fiber 110, third optical fiber 130, fourth optical fiber 140 and second optical fiber 120, and thereafter reaches the optical receiver 30.

For example, the first optical fiber 110 is a single-mode optical fiber having a chromatic dispersion of about 16 to 20 ps/nm/km at a wavelength of 1.55 $\mu$m and a core diameter larger than that of a general optical fiber. The second optical fiber 120 is a dispersion-compensating optical fiber having a negative chromatic dispersion of 1.55 $\mu$m. In this case, by properly setting the ratio of the lengths of the respective optical fibers, the absolute value of the accumulated chromatic dispersion of the entire system decreases near the wavelength of 1.55 $\mu$m, which is included in a signal wavelength band, thereby effectively suppressing a deterioration in transmission quality due to a deterioration in signal waveform.

More specifically, the first optical fiber 110 has an effective area of about 110 $\mu$m$^2$ at the wavelength of 1.55 $\mu$m, and the second optical fiber 120 has an effective area of about 20 $\mu$m$^2$ at the wavelength of 1.55 $\mu$m. In this case, as the third optical fiber 130 of the connecting member 150, an optical fiber member having an effective area of about 80 $\mu$m$^2$ at the wavelength of 1.55 $\mu$m is used. As the fourth optical fiber 140 of the connecting member 150, an optical fiber member having an effective area of about 50 $\mu$m$^2$ at the wavelength of 1.55 $\mu$m is used. When the first and second optical fibers 110 and 120 were directly fusion-spliced to each other (without heat treatment), the resultant connection loss (fusion-splicing loss) was 1.3 dB. On the other hand, when the first and second optical fibers 110 and 120 were connected through the connecting member 150, the connection loss of the entire optical fiber transmission line 10 was 0.36 dB. When the third and fourth optical fibers 130 and 140 of the connecting member 150 were subjected to heat treatment at a temperature of about 1,000°C for 10 min after fusion-splicing, the connection loss was reduced to 0.2 dB or less.

As has been described above, according to the present invention, since the first and second optical fibers which exhibit a high fusion-splicing loss are optically connected to each other through the connecting member formed by connecting the third and fourth optical fibers with a low loss in the above manner, the connection loss between the first and second optical fibers becomes low. In addition, since the use of the connecting member having the above structure eliminates the need to perform heat treatment on a site where the first and second optical fibers are installed, the connecting operation on the installation site is facilitated, thus greatly improving productivity.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

**Claims**

1. A cable connecting method of optically connecting a first cable including a first optical fiber with a first core diameter to a second cable including a second optical fiber with a second core diameter smaller than the first core diameter, comprising the steps of:

preparing a connecting member comprising a third optical fiber with a third core diameter equal to or smaller than the first core diameter and a fourth optical fiber with a fourth core diameter equal to or larger than the second core diameter, said third and fourth optical fibers being previously and directly connected to each other by fusion-splicing said third and fourth optical fibers, an expansion core treatment being applied to said fourth optical fiber so as to reducing a difference between the third and fourth core diameters; and
respectively performing a fusion-splicing of one end face of said first optical fiber and one end face of said third optical fiber of said connecting member, and a fusion-splicing of one end face of said second optical fiber and one end face of said fourth optical fiber.

2. A method according to claim 1, wherein said connecting member comprises a polyimid coat covering the outer peripheries of said third and fourth optical fibers, and
wherein said connecting member is accommodated in a predetermined joint box.

3. A method according to claim 1, wherein said third and fourth optical fibers are selected such that an increase amount of a transmission loss between said first and second optical fibers due to the insertion of said connecting member becomes 0.45 dB or less.

4. A method according to claim 1, wherein, at a predetermined wavelength, a difference ratio of a mode field diameter of said third optical fiber with respect to that of said first optical fiber and a difference ratio of a mode field diameter of said fourth optical fiber with respect to that of said second optical fiber are respectively 5% or less.

5. A method according to claim 1, wherein said third optical fiber and said fourth optical fiber are respectively held while having the curvature more than a predetermined curvature.

6. An optical fiber connecting member comprising:

a first optical fiber having a first core diameter; and

a second optical fiber having a second core diameter smaller than the first core diameter,

wherein said first and second optical fibers are previously and directly connected to each other by fusion-splicing said first and second optical fibers, an expansion core treatment being to applied to said second optical fiber so as to reducing a difference between the first and second core diameters.

7. A member according to claim 6, further comprising a polyimid coat covering the outer peripheries of said first and second optical fibers.

8. A member according to claim 6, wherein a coat covering a predetermined region including a fusion-splicing point between said first and second optical fibers is formed so as for its diameter to become constant or continuously change along a longitudinal direction of said optical fiber connecting member.

9. A member according to claim 6, comprising a reinforcing member arranged so as to cover the region including a fusion-splicing point between said first and second optical fibers.

10. A member according to claim 6, wherein each of said first and second optical fibers has a length sufficient to ensure a single mode with respect to light of a predetermined wavelength.

11. A member according to claim 6, wherein said first optical fiber and said second optical fiber are respectively held while having the curvature more than a predetermined curvature.

12. A member according to claim 6, wherein a surplus length treatment is performed so as for at least a part of said third optical fiber and at least a part of said fourth optical fiber to fall within a predetermined range from a first bending diameter and a second bending diameter.

13. A member according to claim 6, comprising a marker for differentiating between said first and second optical fibers.

## Fig.1A

1a

2a

1b

2b

110    150    120

## Fig.1B

150

130    A    140

130a  130b            140b  140a

AA

*Fig.2A*

*Fig.2B*

*Fig.2C*

*Fig.2D*

# Fig.3

## Fig.4A

D3

134  130  132
144  140  D4

131
130a
130b  133  134
142
140a
140b  143  144
141

## Fig.4B

134  130  132
144  140

131
133  134
142
143  144  141

## Fig.4C

134  130  142
144  140

131
133  134  132
143  144  141

A

AA

## Fig.4D

134  130  154  144  140

131
133  134  154  143  144  141

150

## Fig.5A

## Fig.5B

Fig.6

Fig.7

# Fig.8